# EUROPÄISCHE PATENTANMELDUNG

(11) **EP 0 956 846 A2**
(43) Veröffentlichungstag der Anmeldung: **17.11.1999**
(21) Anmeldenummer: 99106911.3
(22) Anmeldetag: 08.04.1999
(51) Int. Cl.: A61G 5/00

(54) **Rollstuhl für Behinderte**

(30) Priorität: 27.04.1998 DE 19818821
(71) Anmelder: Gobbers, Dieter, Lehigh Acres, FL 33970 (US); Gobbers, Walter, Lehigh Acres, FL 33970 (US)
(72) Erfinder: Gobbers, Dieter, Lehigh Acres, FL 33970 (US)
(74) Vertreter: Dr. Weitzel & Partner

(57) **Zusammenfassung**

Die Erfindung betrifft einen Rollstuhl für Behinderte;
mit einem Sitz;
mit einem Fahrgestell.

Gemäß der Erfindung ist ein solcher Rollstuhl mit den folgenden Merkmalen versehen:
mit einer Hubeinrichtung zum Heben und Senken des Sitzes bzw. des gesamten Rollstuhles;
die Hubeinrichtung umfaßt teleskopartig miteinander zusammenarbeitende Elemente, die eine Säule miteinander bilden und die zwei End-Elemente sowie wenigstens ein dazwischen befindliches Mittel-Element aufweisen;
wenigstens die Mittel-Elemente sowie ein erstes End-Element weisen Außengewinde auf;
wenigstens die Mittel-Elemente sowie das zweite Außenelement weisen ein Innengewinde auf;
dem einen End-Element ist ein Antrieb zugeordnet, der dieses End-Element um dessen Längsachse in beiden Richtungen zu verdrehen vermag.

## Beschreibung

Die Erfindung betrifft einen Rollstuhl für behinderte Personen. Solche Rollstühle umfassen einen Sitz, ein Fahrgestell und meistens einen Antrieb. Dabei handelt es sich im allgemeinen um einen elektromotorischen Antrieb mit Batterie.

Die bisher bekannten Rollstühle haben einen gravierenden Nachteil. Der Behinderte befindet sich bei Benutzung des Rollstuhles in einer bestimmten Höhe über dem Fußboden. In dieser Position kann der Behinderte zwar einige Tätigkeiten des täglichen Lebens verrichten, beispielsweise Türen öffnen oder den Fernseher einschalten. Für andere Tätigkeiten ist die Position jedoch ungünstig, weil zu hoch oder zu tief. Will er etwa einen Elektrostecker in eine Steckdose einstecken, so kann die Position zu hoch sein. Will er einen Schalter in einem Aufzug drücken oder ein normales Rednerpult benutzen, so kann die Position zu niedrig sein.

Der Erfindung liegt die Aufgabe zugrunde, einen Rollstuhl anzugeben, der derart gestaltet ist, daß der Benutzer seine Höhenposition den jeweiligen Anforderungen anpassen kann. Der Rollstuhl soll sich dabei zu jedem Zeitpunkt in einem stabilen Zustand befinden.

Diese Aufgabe wird durch die Merkmale von Anspruch 1 gelöst.

Dadurch wird im einzelnen folgendes erreicht: Der Behinderte kann mit einem solchen Rollstuhl seine Sitzhöhe jederzeit einstellen. Die Einstellung ist eine stufenlose. Sie ist ferner stoßfrei und vermeidet damit, daß das Einstellen dem Benutzer Unannehmlichkeiten oder gar Schmerzen verursacht. Durch die Teleskopbauweise mit Gewinde-Elementen wird bei entsprechendem Element-Durchmesser auch die notwendige Stabilität erzielt, die auch noch bei ausgefahrenem Zustand beibehalten wird. Die Erfindung ist anhand der Zeichnung näher erläutert. Darin ist im einzelnen folgendes dargestellt:
- Fig. 1: veranschaulicht eine aus Einzelelementen aufgebaute Säule in ausgefahrenem Zustand;
- Fig. 1a-1d: lassen Einzelheiten von Einzelelementen erkennen;
- Fig. 2 - 8: veranschaulichen die Anwendung der Erfindung bei einem Rollstuhl;
- Fig. 9: zeigt in vergrößerter Darstellung ein aus mehreren Gewindeelementen gebildetes Paket in eingefahrenem Zustand in perspektivischer Darstellung von unten her gesehen;
- Fig. 10: zeigt ein solches Paket in perspektivischer Darstellung von unten her gesehen im Schnitt;
- Fig. 11: zeigt das unterste (äußerste) Gewindeelement in perspektivischer Darstellung;
- Fig. 12: zeigt eines der mittleren Gewindeelemente, wiederum in perspektivischer Darstellung von oben her gesehen.
- Fig. 13: zeigt ein Paket von ineinander verschraubten Gewindeelementen in perspektivischer Darstellung von oben her gesehen;
- Fig. 14: zeigt das äußere, feststehende Element eines Paketes von Gewindeelementen in perspektivischer Ansicht in dessen hohlen Innenraum hinein von unten her, ferner eine Mitnehmerscheibe mit Anschlagleiste und Verstärkungsrippen;
- Fig. 15: zeigt den Gegenstand von Fig. 14 in einer Seitenansicht, zusammen mit einem Antriebskettenrad sowie mit der Anschlagleiste;
- Fig. 16: zeigt das gesamte Paket in perspektivischer Ansicht schräg von oben her;
- Fig. 17: zeigt das gesamte Paket in perspektivischer Ansicht schräg von unten her;
- Fig. 18: zeigt Antriebsritzel und Paket in einer Draufsicht mit Anschlagleiste 103;
- Fig. 18a: zeigt das Antriebskettenrad in einer Schnittansicht A-A in Fig. 18;
- Fig. 18b: zeigt wiederum das Antriebskettenrad in entgegensetzter Blickrichtung;
- Fig. 19: zeigt einen kompletten Rollstuhl mit eingebauter Hubeinrichtung;
- Fig. 20: zeigt den Gegenstand von Fig. 19 bei abgenommenen rechtsseitigen Rädern und entfernter Hubeinrichtung in einer perspektivischen Ansicht;
- Fig. 21: zeigt den Gegenstand von Fig. 20 in Seitenansicht;
- Fig. 22: zeigt eine Aufnahmeeinrichtung zum Aufnehmen der Hubeinrichtung;
- Fig. 23: zeigt die Hubeinrichtung mit der Aufnahmeeinrichtung;
- Fig. 24: zeigt einen erfindungsgemäßen Rollstuhl in einer Ansicht von hinten;

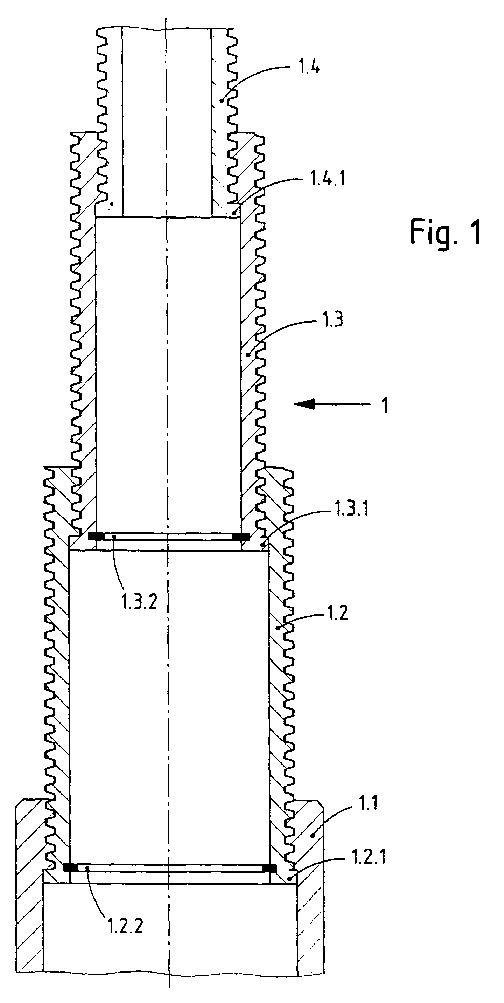

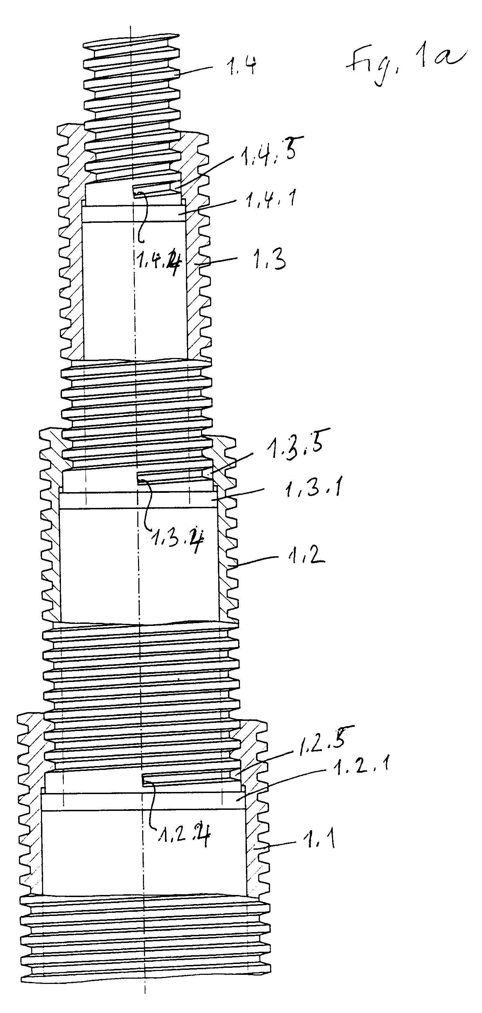

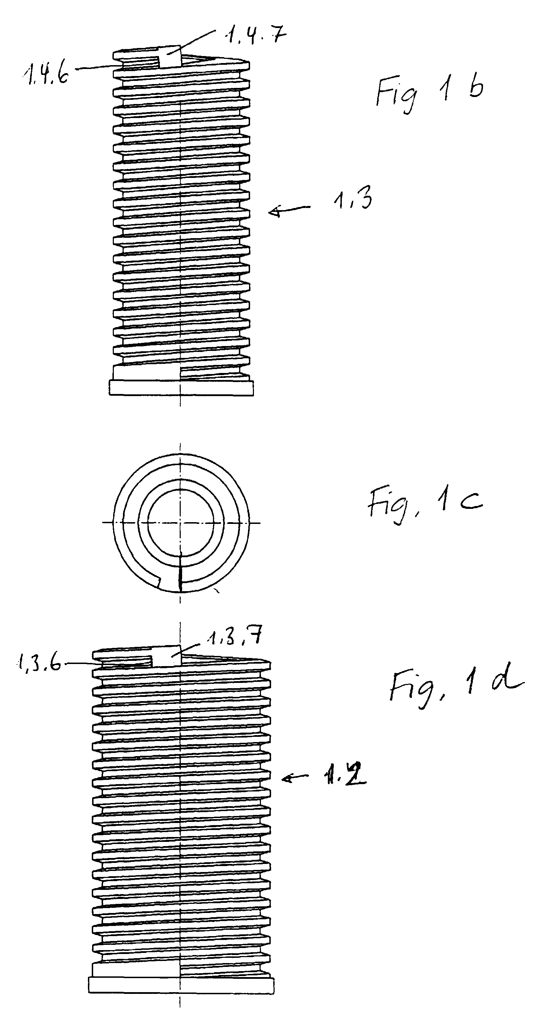

Die in Fig. 1 gezeigte Säule 1 ist aus mehreren zylindrischen Elementen 1.1 bis 1.4 aufgebaut. Wie man sieht, sind die Elemente 1.2, 1.3 und 1.4 mit Außengewinde versehen. Die Elemente 1.1, 1.2, 1.3 weisen außerdem in ihren oberen Bereichen jeweils ein Innengewinde auf. Alle Gewinde sind im vorliegenden Falle Trapezgewinde. Es könnten jedoch auch andere Gewindeprofile vorgesehen werden, beispielsweise Rundgewinde.

Die hier dargestellte Kraftübertragungseinrichtung ist in ausgefahrenem Zustand dargestellt.

Element 1.2 weist an seinem Fuß einen Bund 1.2.1 auf. Element 1.3 weist an seinem Fuß einen Bund 1.3.1 auf. Element 1.4 weist an seinem Fuß einen Bund 1.4.1 auf. Diese Bunde dienen als Anschlag und verhindern das völlige Ausfahren des betreffenden Elementes aus dem jeweils darunter befindlichen Element. Sie dienen außerdem zur Führung und zur Aufnahme von Biegekräften.

Die Elemente 1.2 und 1.3 sind ferner - wiederum im Fußbereich - mit einem Sicherungsring 1.2.2 bzw. 1.3.2 versehen. Diese Sicherungsringe dienen ebenfalls als Anschläge beim Einfahren der Einzelelemente ineinander, so daß ein "Durchfahren" eines Elementes durch das darunter befindliche verhindert wird. So schlägt beispielsweise Bund 1.3.1 beim Herunterschrauben von Element 1.3 gegen den Sicherungsring 1.2.2 von Element 1.2 an.

Figur 1a zeigt wiederum eine aus Einzelelementen aufgebaute Säule in ausgefahrenem Zustand. Man erkennt die Bunde 1.2.1, 1.3.1 und 1.4.1, die auch in Figur 1 zu sehen sind.

Die Innen- und Außengewinde der einzelnen Elemente 1.1, 1.2, 1.3 und 1.4 sind wiederum Trapezgewinde.

Die Besonderheit liegt in folgendem:
Das Gewinde eines jeden Elementes endet in seinem unteren Bereich plötzlich, d.h. ohne ein sanftes Auslaufen. Die Gewinderille endet somit mit einer im wesentlichen achssenkrechten Fläche 1.2.4, 1.3.4, 1.4.4. Den genannten Endflächen einer jeden Gewinderille entspricht eine Anschlagfläche 1.2.5, 1.3.5, 1.4.5 der zugehörenden Gewinderippe. Damit werden Anschläge geschaffen, die ein weiteres Verdrehen im Sinne eines Herausfahrens der einzelnen Elemente auseinander verhindern.

Figur 1b zeigt wiederum Element 1.3, Figur 1d zeigt Element 1.2 und Figur 1c zeigt die beiden Elemente in Draufsicht.

Wie man erkennt, sind die Gewinde im oberen Bereich ähnlich gestaltet wie im unteren Bereich. So hört der letzte Gewindegang beim Element 1.3 mit einer Anschlagfläche 1.4.6 plötzlich auf, ohne sanft auszulaufen. Bei Element 1.2 erkennt man die Anschlagfläche 1.3.6. Dabei werden die Anschlagflächen aus Sperrteilen 1.4.7 bzw. 1.3.7 gebildet, die eigenständige Bauteile sind und die beispielsweise durch Verschrauben mit dem jeweiligen Element fest verbunden sind.

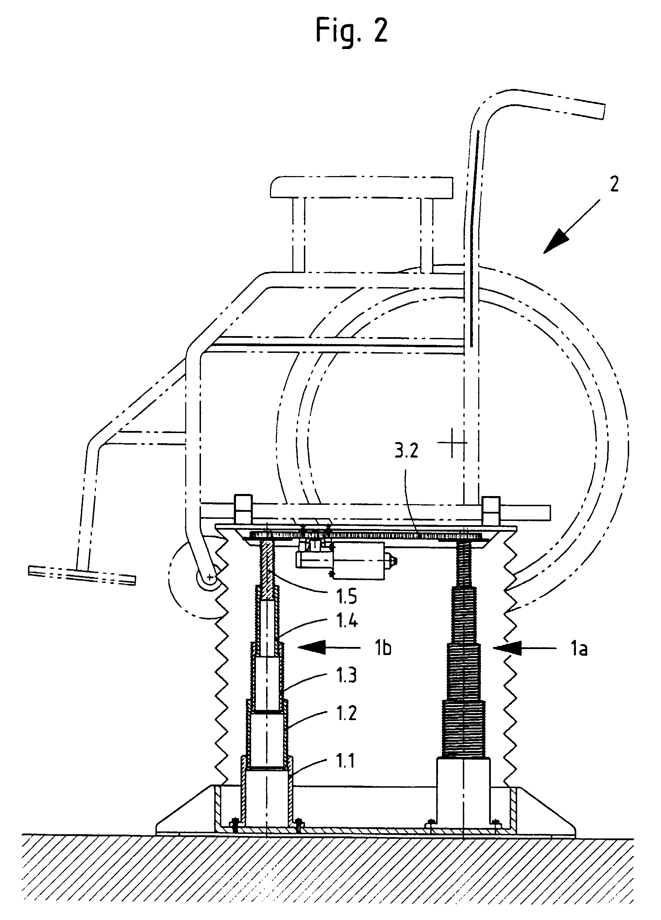

Ein Vorteil dieser Ausführungsform besteht darin, daß die Sicherungsringe entfallen können, die in Figur 1 gezeigt sind - siehe dort die Sicherungsringe 1.2.2 und 1.3.2.
Aus Fig. 2 erkennt man im einzelnen folgendes: Einem Rollstuhl 2 ist eine Hubvorrichtung zugeordnet, die als Kraftübertragungseinrichtung vier Säulen aufweist. Von den vier Säulen sind die beiden vorderen 1a und 1b zu sehen. Die Säulen sind in ausgefahrenem Zustand dargestellt, und zwar in der höchst erreichbaren Position.

Die Säulen sind im wesentlichen so aufgebaut wie jene gemäß Fig. 1.

Es ist ein Antrieb 3 vorgesehen. Dieser umfaßt einen Elektromotor 3.1. Er umfaßt außerdem vier Kettenräder. Dabei ist jeweils eines dieser Kettenräder drehtest am obersten Element der betreffenden Säule angeordnet. Alle Kettenräder sind von einer Kette 3.2 umschlungen. Ferner umschlingt die Kette 3.2 ein Antriebs-Kettenrad, das vom Motor 3.1 antreibbar ist. Läuft die Kette 3.2 - von oben her gesehen - im Uhrzeigersinn um, so werden zunächst die oberen Elemente in die zweitoberen Elemente eingeschraubt, somit bei Säule 1b Element 1.5 in Element 1.4. Ist auf diese Weise Element 1.5 weitgehend vollständig in Element 1.4 eingetaucht, so kommt es zu einem Anschlagen der beiden Elemente aneinander - siehe in diesem Zusammenhang Fig. 1 mit den dort dargestellten Bunden und Sicherungsringen. Läuft die Kette 3.2 weiterhin im Uhrzeigersinn um, so kommt es sodann auch zu einem Einschrauben der Elemente 1.4 in die Elemente 1.3, usw.. Bei diesem gesamten Vorgang findet ein Verringern der Hubhöhe des Rollstuhles 2 statt.

Läßt man Motor 3.1 im entgegengesetzten Drehsinn umlaufen, so kommt es demgemäß auch zu einem entgegengesetzten Umlauf der Kette 3.2, somit im Gegenzeigersinn. Dies führt wiederum zu einem Ausfahren der einzelnen Elemente auseinander, und damit zu einem Anheben des Rollstuhles 2.

Die Gewinde der Elemente der einzelnen Säulen sind selbsthemmend. Eine einmal erzielte Hubhöhe bleibt somit auch unter Last erhalten, es bedarf hierzu keiner besonderen Sicherungsmaßnahmen. Gleichwohl können derartige noch zusätzlich getroffen werden.
Die verschiedenen Bauteile der Hubvorrichtung des Rollstuhles sind in einer solchen Höhe über dem Boden anzuordnen, daß der Rollstuhlfahrer Hindernisse, wie Türschwellen usw., überwinden kann.

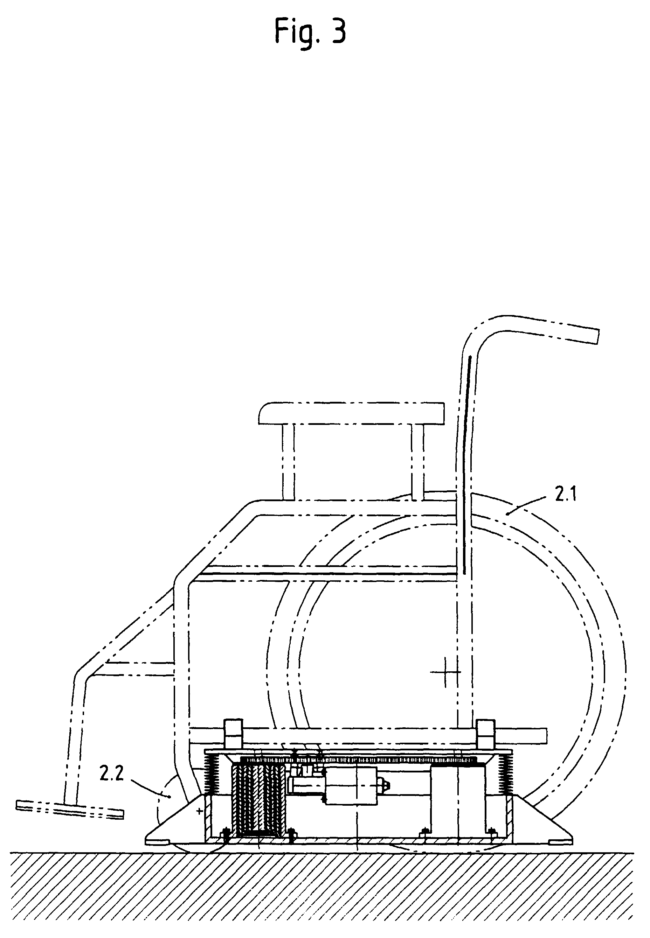

Fig. 3 zeigt den Gegenstand von Fig. 2 in eingefahrenem Zustand. Sämtliche Elemente sind nun ineinander geschachtelt. Die Räder 2.1, 2.2 des Rollstuhles haben nunmehr wieder Kontakt mit dem Fußboden.

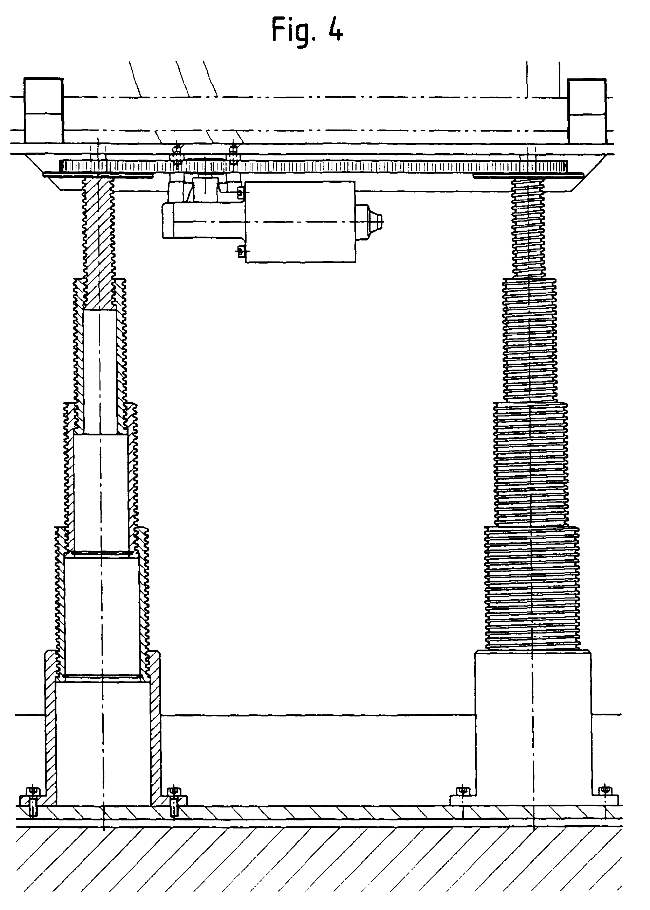

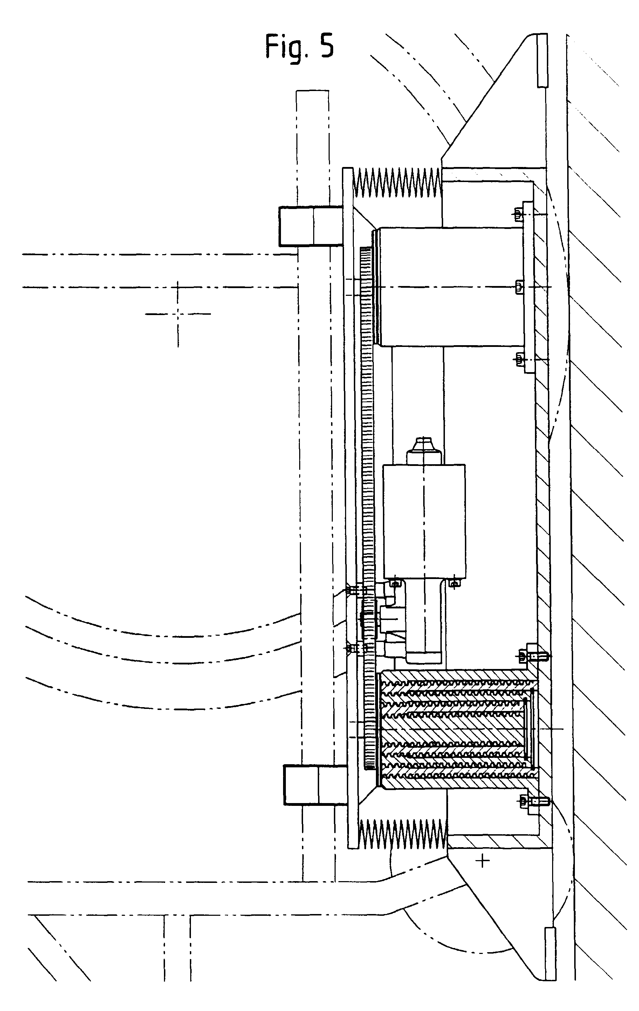

Die Figuren 4 und 5 zeigen den Gegenstand von Fig. 1 in vergrößerter Darstellung, einmal ausgefahren (Fig. 4) und einmal eingefahren (Fig. 5).

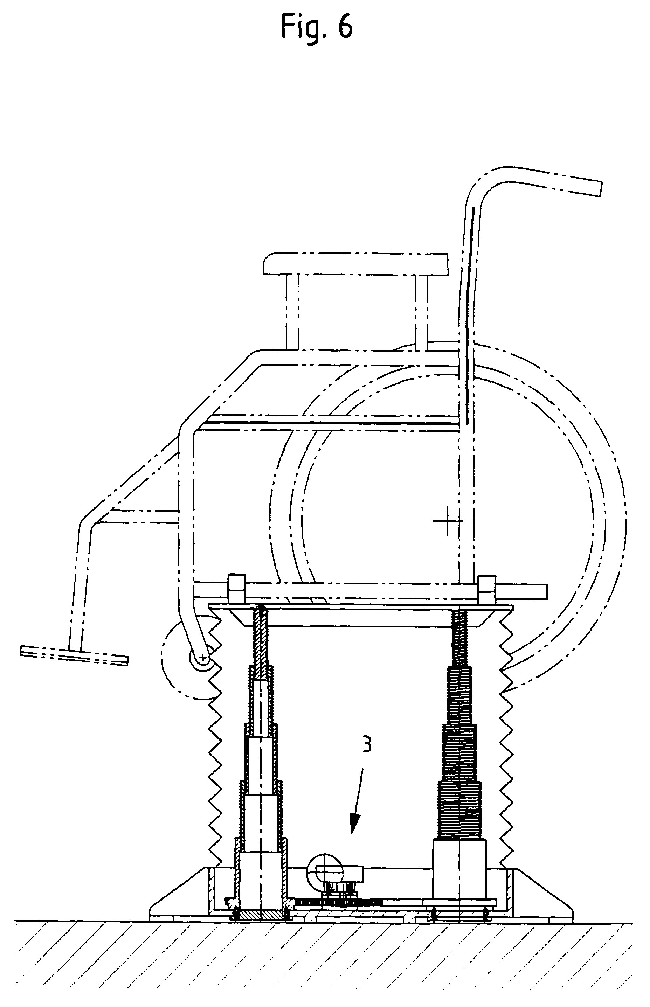

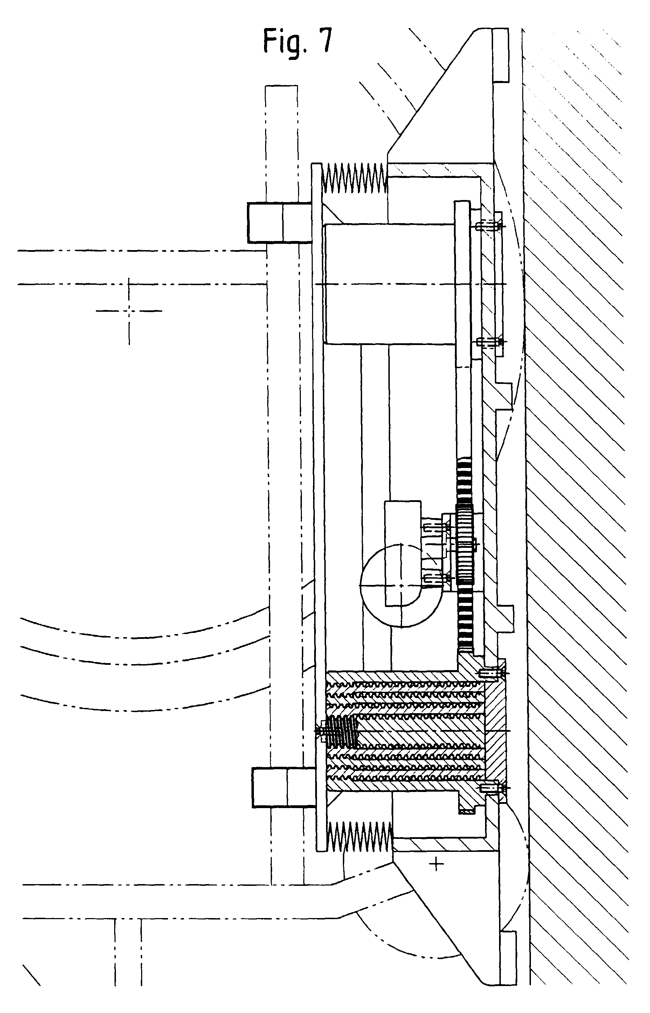

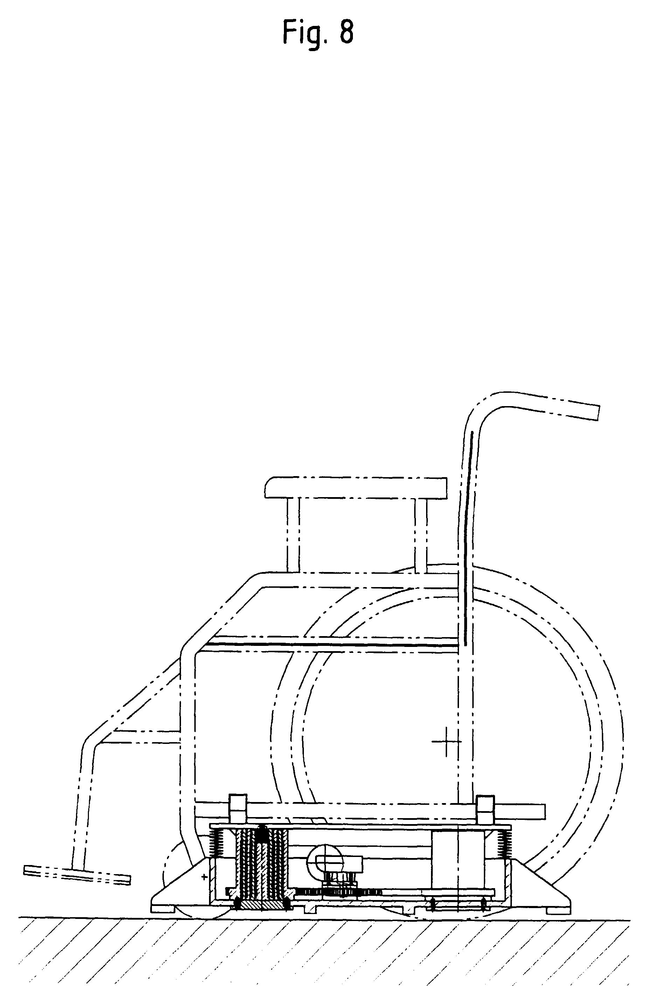

Bei den Figuren 6 bis 8 ist der Antrieb 3 nicht im oberen, sondern im unteren Bereich der Säulen angeordnet. Dies hat den Vorteil, daß der Schwerpunkt von Rollstuhl samt Hubvorrichtung tiefer liegt, was die Sicherheit erhöht.

Eine interessante Variante besteht in folgendem: Der Rollstuhl muß nicht in seiner Gesamtheit angehoben werden. Die Konstruktion kann derart gestaltet sein, daß lediglich der eigentliche Sitzkorpus - Sitz mit Lehne - angehoben wird, nicht aber das Fahrgestell. Dieses bleibt am Boden. Dies bedeutet, daß sich der Rollstuhlbenutzer durch Knopfdruck auf ein höheres Niveau begeben kann, bei Bodenhaftung der Räder. Er kannn dies somit während der Fahrt vornehmen.

Die Hubvorrichtung ist von einem Faltenbalg 4 umgeben, der verhindert, daß ein Benutzer versehentlich mit den Fingern an die Verzahnung greift und sich dabei verletzt, und der außerdem die Hubvorrichtung gegen Verschmutzung von außen schützt.

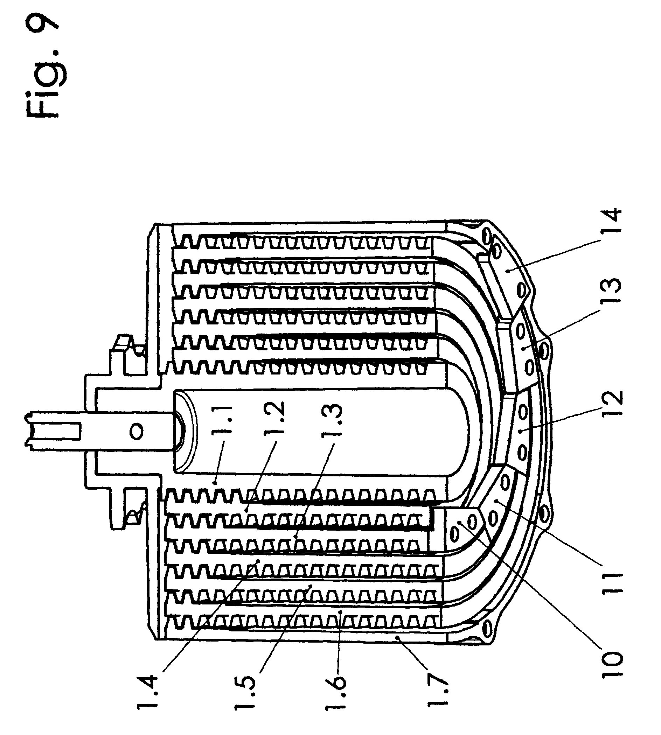

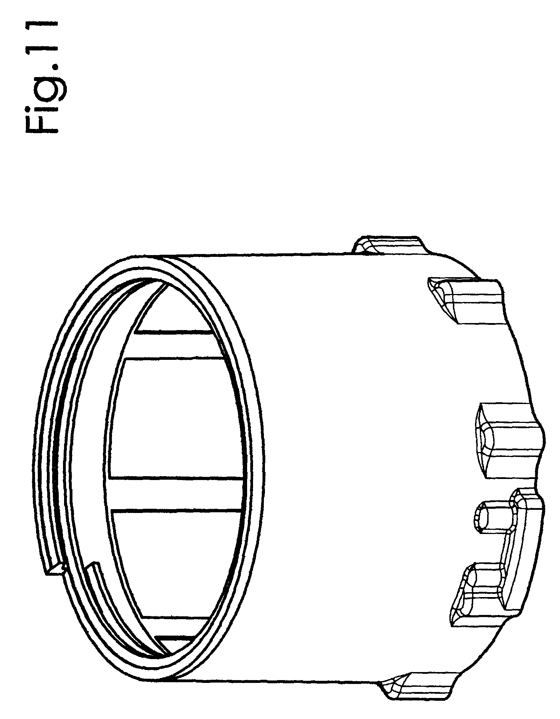

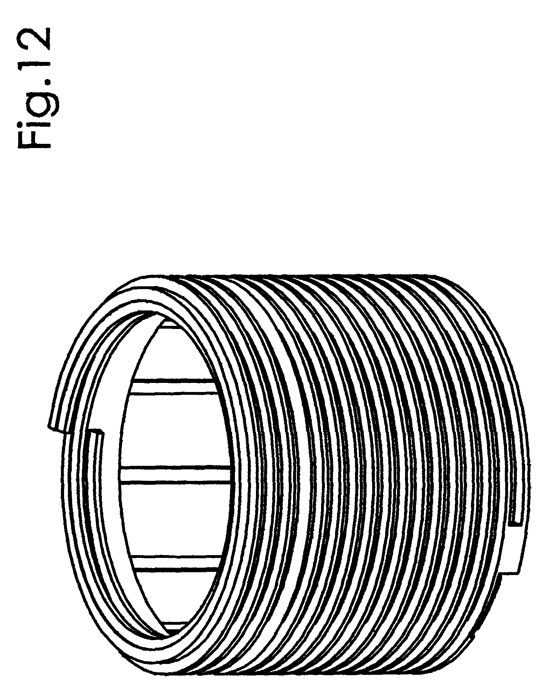

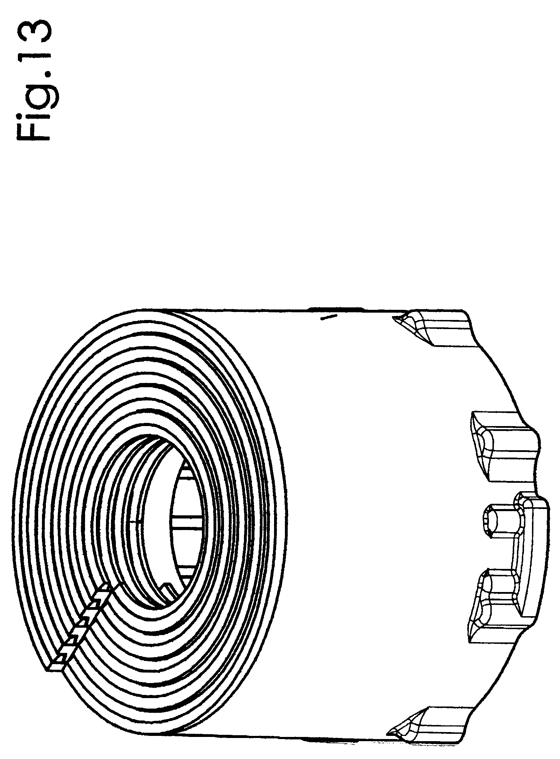

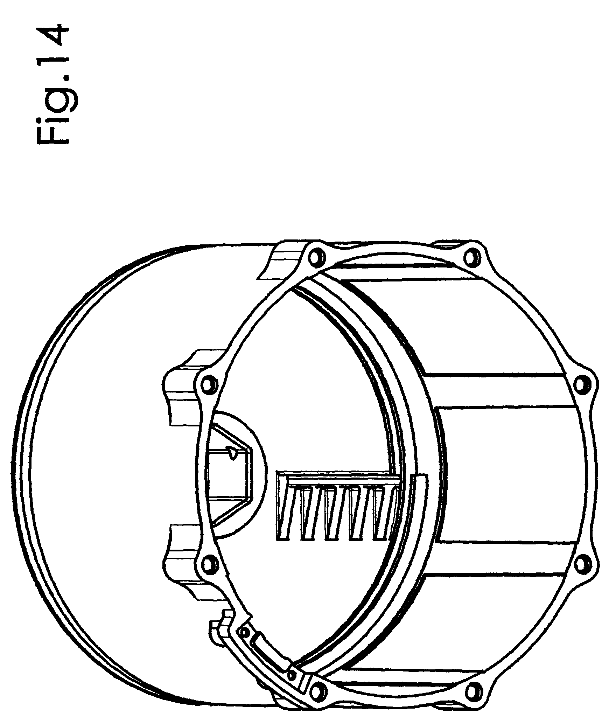

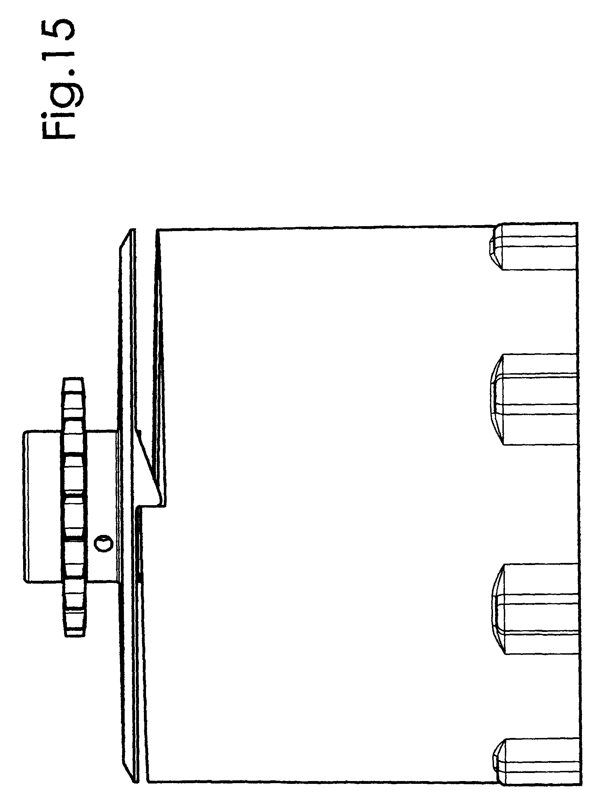

Die in den Figuren 9 bis 18b dargestellten Gewindeelemente haben eine Besonderheit. Zum Verhindern des völligen Ausfahrens eines Elementes aus einem benachbarten Element sind nämlich Anschlagflächen vorgesehen, die aus Stirnflächen der Gewindegänge gebildet sind, ferner aus besonderen Anschlägen. Man sieht dies bereits besonders gut aus Figur 9. Dort sind insgesamt sieben Gewindeelemente 1.1, 1.2, 1.3, 1.4, 1.5, 1.6, 1.7 vorgesehen. Wie man beispielsweise sieht, bilden Anschlag 12 und Gewindeelement 1.5 ein Anschlagflächenpaar miteinander - siehe Pfeil.

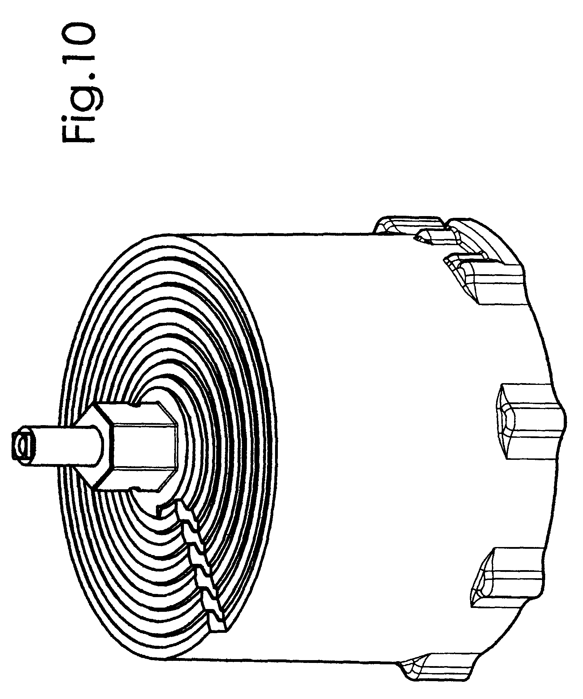

Die Figuren 10 bis 13 sind aus sich heraus verständlich. Sie lassen ebenfalls das Prinzip erkennen.

Im Gegensatz zu den Ausführungsformen gemäß der Figuren 1 bis 8 bedarf es hierbei keiner Anschlagelemente wie etwa der Elemente 1.2.1, 1.3.1 oder 1.4.1 in Fig. 1a. Dies hat einen doppelten Vorteil:

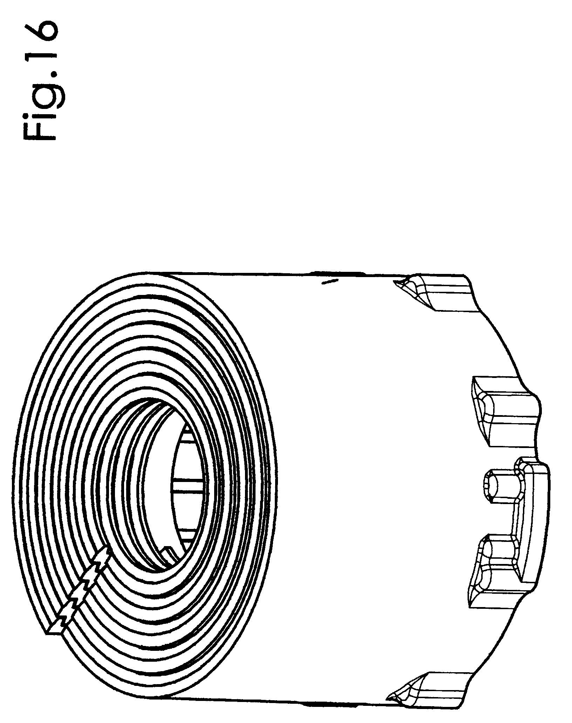

Zum einen wird Bauhöhe eingespart. Zum anderen wird ein Verkeilen vermieden. Man beachte insbesondere die Anschlagflächen, die sich in Fig. 16 auf der Oberseite am Ende der einzelnen Gewindegänge erkennen lassen. Diese Anschlagflächen verlaufen jeweils in einer Axialebene.

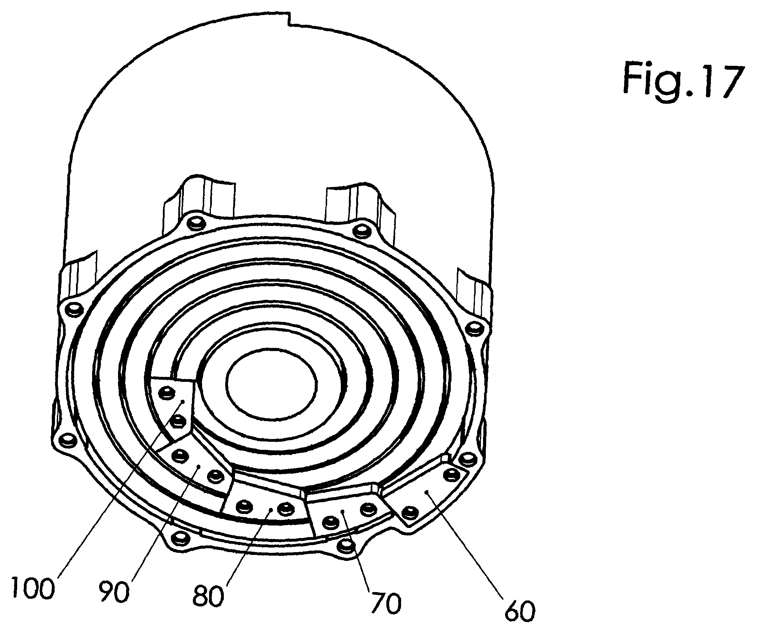

Aus der Fig. 17 erkennt man Anschlagelemente 60 bis 100. Jedes Anschlagelement ist an einem der Teleskopelemente des gesamten Teleskoppaketes fixiert. Zwei einander benachbarte Anschlagelemente schlagen aneinander, und zwar wiederum in Axialebenen, somit nicht in achssenkrechten Ebenen. Dabei versteht es sich, daß die Ebenen der Anschlagflächen keine reinen Axialebenen sein müssen. Vielmehr könnten die Ebenen auch gegen Axialebenen geneigt sein. Die Hauptsache ist, daß kein Verkeilen stattfindet.

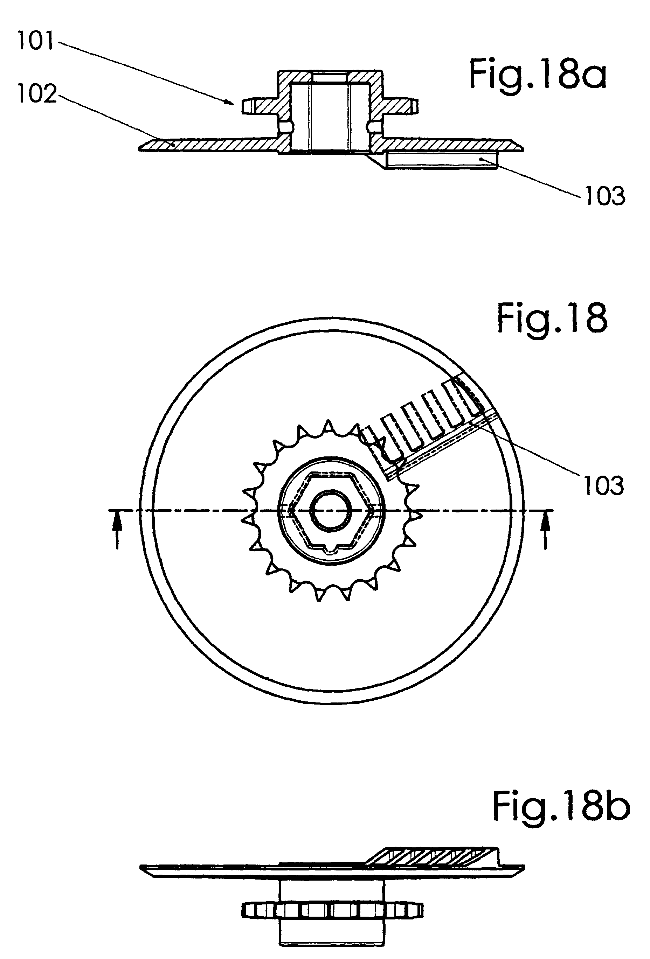

Bei der Ausführungsform gemäß der Figuren 18, 18a und 18b erkennt man das Antriebskettenrad 101. Dieses ist einteilig mit einer Scheibe 102. An dieser befindet sich eine Anschlagleiste 103, an der in eingefahrenem Zustand des gesamten Teleskoppaketes die in Figur 16 erkennbaren Anschlagflächen anschlagen. Die Anschlagleiste 103 hat außerdem noch die Aufgabe, die einzelnen Gewindeelemente von unterwegs nach unten mitzunehmen. Dies ist deshalb besonders vorteilhaft, weil damit die Torsionskräfte auf die einzelnen Gewindeelemente übertragen werden. Wäre dies nicht der Fall, so würden die gesamten Torsionskräfte hauptsächlich auf dem obersten, im Durchmesser kleinsten Gewindeelement lasten. Außerdem entsteht beim Anschlagen der oberen Gewindeanfänge der einzelnen Gewindeelemente und der Anschlagleiste 103 bei der erfindungsgemäßen Ausführungsform keine Verkeilung.

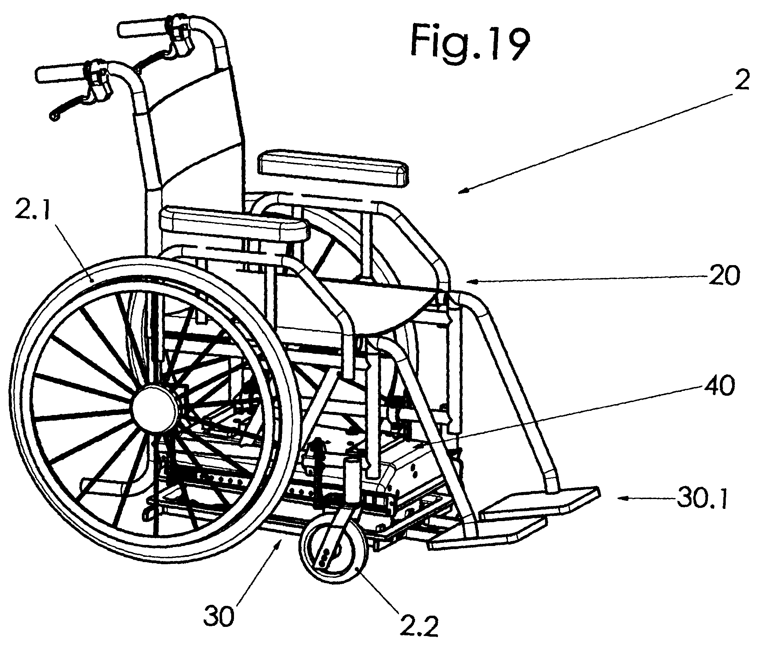

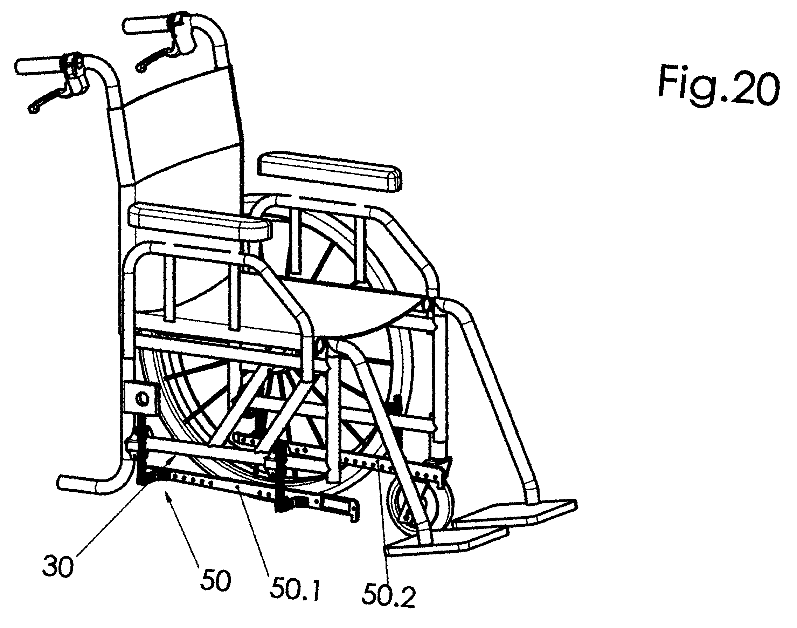

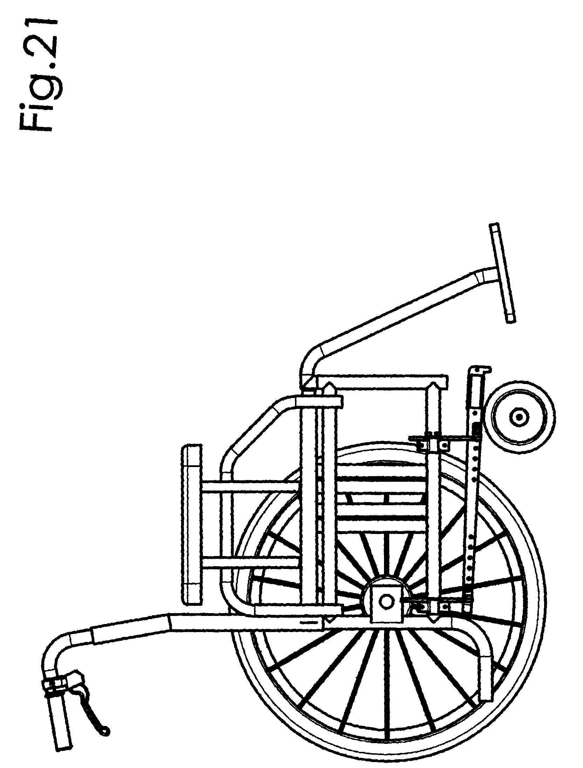

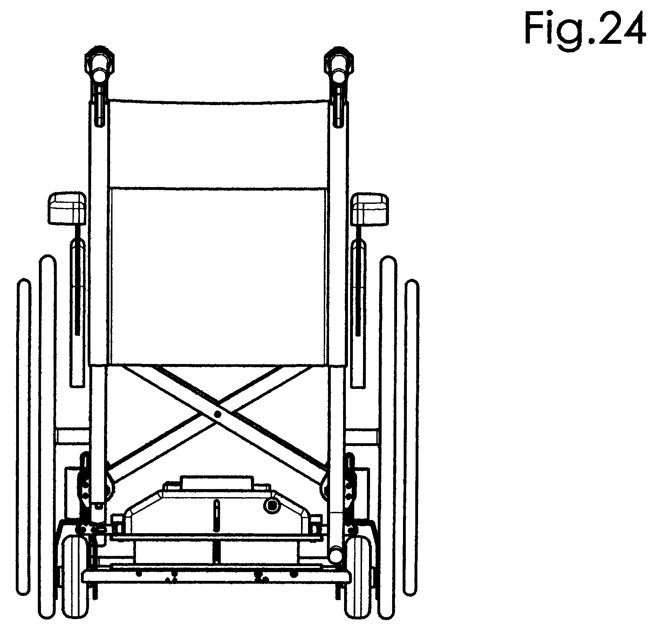

Die Figuren 19 bis 24 veranschaulichen hauptsächlich die Hubeinrichtung in ihrem Verhältnis zum Rollstuhl bzw. zu dessen Fahrgestell. So erkennt man in Fig. 19 einen Rollstuhl 2 mit seinen Rädern 2.1, 2.2. Der Rollstuhl umfaßt einen Sitz 20, ein Fahrgestell 30, sowie eine Hubeinrichtung 40.

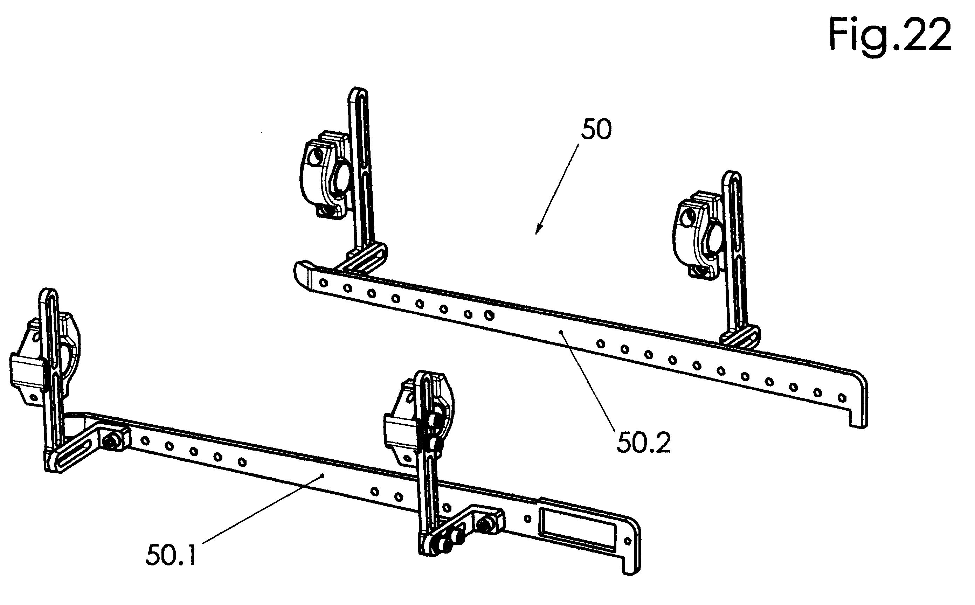

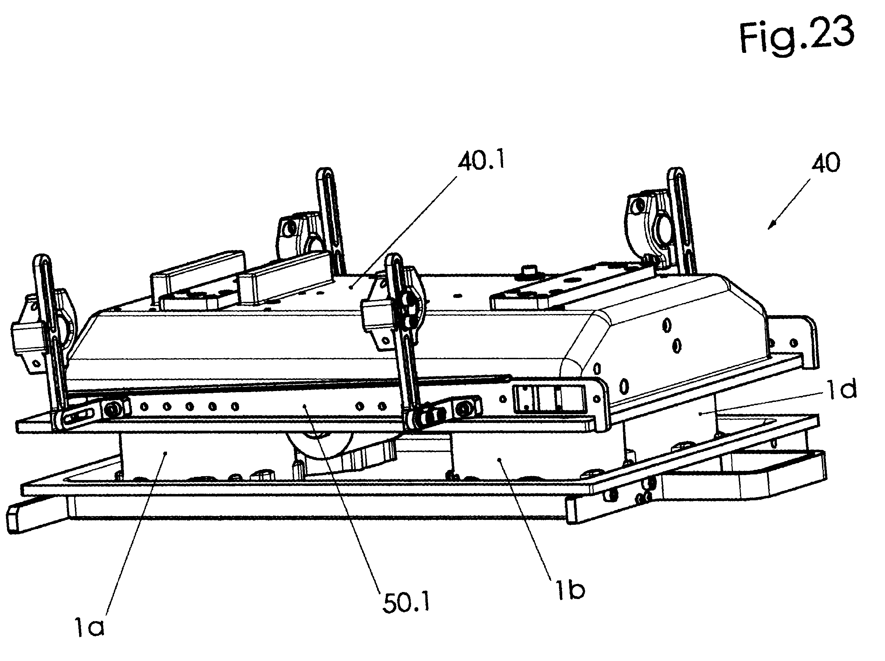

In Fig. 22 erkennt man eine Aufnahmeeeinrichtung 50. Diese umfaßt zwei Halter 50.1, 50.2, die sich von vom nach hinten verjüngen. Die Aufnahmeeinrichtung 50 ist am Fahrgestell 30 festgeschraubt. Wie man aus Fig. 23 erkennt, weist die Hubeinrichtung 40 entsprechende Gleitführungen auf, in die die Halter 50.1, 50.2 einschiebbar sind. Dieses Einschieben geschieht dadurch, daß die Hubeinrichtung 40 auf dem Fußboden ruht, und daß der Rollstuhlfahrer rückwärts fährt, so daß die sich verjüngenden Halter 50.1, 50.2 in die genannten Gleitführungen eingeschoben werden. Ein Einschieben in Vorwärtsrichtung ist nicht möglich, da hierbei die Fußrasten 30.1 im Wege wären.

Man erkennt aus Fig. 23 auch Hubeinrichtungen 1a, 1b und 1d. Eine Hubeinrichtung 1c ist dabei verdeckt. Die Hubeinrichtungen sind so aufgebaut, wie dies in den Figuren 9 bis 13 dargestellt ist. Es handelt sich somit um vier Säulen, die aus Gewindeelementen bestehen; die Gewindeelemente sind teleskopierbar.

Die Hubeinrichtung 40 umfaßt in ihrem oberen Bereich einen wannenartigen Behälter 40.1. Dieser dient der Aufnahme der Batterie für den Antrieb.

## Patentansprüche

1. Rollstuhl (2) für Behinderte;
1.1 mit einem Sitz (20);
1.2 mit einem Fahrgestell (30);
1.3 mit einer Hubeinrichtung (40) zum Heben und Senken des Sitzes (20) bzw. des gesamten Rollstuhles (2);
1.4 die Hubeinrichtung (40) umfaßt teleskopartig miteinander zusammenarbeitende Elemente (1.1, 1.2, 1.3, 1.4, 1.5, 1.6, 1.7), die eine Säule (1, 1a, 1b, 1c, 1d) miteinander bilden und die zwei End-Elemente sowie wenigstens ein dazwischen befindliches Mittel-Element aufweisen;
1.5 wenigstens die Mittel-Elemente sowie ein erstes End-Element weisen Außengewinde auf;
1.6 wenigstens die Mittel-Elemente sowie das zweite Außenelement weisen ein Innengewinde auf;
1.7 dem einen End-Element ist ein Antrieb (3) zugeordnet, der dieses End-Element um dessen Längsachse in beiden Richtungen zu verdrehen vermag.

2. Rollstuhl nach Anspruch 1, dadurch gekennzeichnet, daß Anschläge (1.2.1, 1.3.1, 1.4.1) vorgesehen sind, die ein völliges Ausfahren eines Elementes aus einem benachbarten Element verhindern und die gegebenenfalls eine Längsführung bewirken und Biegekräfte aufnehmen.

3. Rollstuhl nach Anspruch 1 oder 2, gekennzeichnet durch die folgenden Merkmale:
3.1 es sind wenigstens drei Säulen vorgesehen, die parallel zueinander angeordnet sind;
3.2 es ist ein einziger Antrieb (3) vorgesehen, mit dem jeweils ein Drehmoment in ein End-Element eingeleitet wird.

4. Rollstuhl nach Anspruch 3, gekennzeichnet durch die folgenden Merkmale:
4.1 denjenigen Endelementen, die sich bei den Säulen am selben Säulenende befinden, ist jeweils ein Antriebsrad zugeordnet, das mit dem End-Element drehfest verbunden ist;
4.2 es ist ein einziger Antriebsmotor (3.1) vorgesehen;
4.3 der Antriebsmotor (3.1) treibt ein zentrales Antriebsrad an, das mit den Antriebsrädern der einzelnen Säulen in einer Ebene liegt;
4.4 es ist ein Gurt vorgesehen, der das zentrale Antriebsrad sowie die anderen Antriebsräder umschlingt, wobei zwischen dem Gurt und den Rädern ein Formschluß besteht.

5. Rollstuhl nach einem der Ansprüche 1 bis 4, dadurch gekennzeichnet, daß die Gewinde der Elemente Trapezgewinde oder Sägezahngewinde sind.

6. Rollstuhl nach einem der Ansprüche 2 bis 5, dadurch gekennzeichnet, daß die Anschläge zum Verhindern des völligen Ausfahrens eines Elementes aus einem anderen Element aus Stirnflächen der Gewindegänge gebildet sind.

7. Rollstuhl nach einem der Ansprüche 1 bis 6, dadurch gekennzeichnet, daß Sitz (20) und Fahrgestell (30) gemeinsam heb- und senkbar sind.

8. Rollstuhl nach einem der Ansprüche 1 bis 7, dadurch gekennzeichnet, daß die Hubeinrichtung (40) eine selbständige Einheit ist, die an das Fahrgestell (30) ankoppelbar ist.

9. Rollstuhl nach Anspruch 8, dadurch gekennzeichnet, daß eine dem Fahrgestell (30) zugeordnete Aufnahmeeinrichtung (50) zur Aufnahme der Hubeinrichtung (40) vorgesehen ist, und daß die Aufnahmeeinrichtung (50) sowie die Hubeinrichtung (30) derart gestaltet und angeordnet sind, daß das Ankoppeln bei auf dem Fußboden liegender Hubeinrichtung durch Rückwärtsfahrt des Rollstuhls (2) durchführbar ist.

10. Rollstuhl nach einem der Ansprüche 1 bis 9, dadurch gekennzeichnet, daß die Hubeinrichtung einen Behälter (40.1) zur Aufnahme einer Batterie für den Antrieb (3) umfaßt.

11. Rollstuhl nach einem der Ansprüche 1 bis 10, dadurch gekennzeichnet, daß den einzelnen Elementen jeweils Anschlagelemente (60, 70, 80, 90, 100) zugeordnet sind, die an einer Stirnseite des betreffenden Elementes an diesem fixiert sind und die ihrerseits Anschlagflächen bilden.

12. Rollstuhl nach einem der Ansprüche 1 bis 10, gekennzeichnet durch die folgenden Merkmale:
12.1 die Anschlagflächen sind aus den einzelnen Elementen selbst gebildet (siehe Figur 16);
12.2 die Anschlagflächen befinden sich im Bereich der oberen oder unteren Enden der Gewindegänge des betreffenden Elementes;
12.3 die Anschlagflächen sind gegen achssenkrechte Ebenen des betreffenden Elementes geneigt angeordnet.

13. Rollstuhl nach einem der Ansprüche 1 bis 12, gekennzeichnet durch die folgenden Merkmale:
13.1 am oberen Ende des Teleskoppaketes ist ein Antriebselement vorgesehen;
13.2 das Antriebselement umfaßt ein Antriebsritzel (101), das mit einem Antriebszahnrad eines Antriebsmotors kämmt;
13.3 das Antriebselement umfaßt eine Anschlagleiste (102), die dazu bestimmt ist, mit den einzelnen Anschlagflächen der einzelnen Teleskopelemente in Eingriff zu gelangen;
13.4 Antriebskettenrad (101) und Anschlagleiste (103) sind von einer zur Längsachse des Teleskoppaketes senkrechten Scheibe (102) getragen.
